(19)

Europäisches
Patentamt
European
Patent Office
Office européen
des brevets

(11) **EP 4 617 652 A1**

(12) **EUROPEAN PATENT APPLICATION**

(43) Date of publication:
**17.09.2025 Bulletin 2025/38**

(21) Application number: **24163898.0**

(22) Date of filing: **15.03.2024**

(51) International Patent Classification (IPC):
**G01N 29/024** (2006.01)

(52) Cooperative Patent Classification (CPC):
**G01N 29/024; G01N 29/032; G01N 29/222;
G01N 29/348**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **GEA Mechanical Equipment Italia
S.p.A.
43123 Parma (IT)**

(72) Inventors:
• **BICZ, Wieslaw
52-428 WROCLAW (PL)**
• **BICZ, Agnieszka
52-428 WROCLAW (PL)**
• **TONELLI, Annachiara
43044 COLLECCHIO (PARMA) (IT)**
• **MAGGI, Leonardo
43126 PARMA (IT)**

(74) Representative: **Dondi, Silvia
Bugnion S.p.A.
Largo Michele Novaro, 1/A
43121 Parma (IT)**

(54) **A METHOD AND AN APPARATUS FOR MEASURING THE SOUND SPEED IN A FLUID
PRODUCT CONTAINED IN A PIPE**

(57)     A method (200) for measuring the sound speed in a fluid product contained in a pipe (2), the method (200) comprising a main cycle which in turn comprises at least the following steps which are cyclically executed at least once:
- emitting a plurality of ultrasonic signals (201) towards the fluid product by a plurality of emitting points (21) located along the pipe (2);

- receiving the plurality of ultrasonic signals (202) by a plurality of receiving points (22) located along the pipe (2);
- measuring a time of flight (207) for a selected group of ultrasonic signals received at the receiving points (22) and calculating a sound speed value (208);
at the end of the main cycle, computing an average sound speed (209).

FIG. 1

EP 4 617 652 A1

**Description**

The present invention relates to a method and an apparatus for measuring the sound speed in a fluid product contained in a pipe.

The invention proposed here is used in the food industry, in particular in the dairy sector, or in the chemical, pharmaceutical or cosmetic industries. The invention can also be used in manufacturing areas where homogenization is a step of the production process.

Consider, for example, the production of carbon-based nanostructured materials, such as graphene and carbon nanotubes or cellular breakdown of yeasts, algae, or microorganisms for the production of intracellular material.

As it is well-known, a homogenizing apparatus comprises a high-pressure pump and a homogenizing valve which acts on the fluid products in order to:

- crush the particles of the fluid to make their dimensions uniform, reducing the average size and the variance of the distribution in order to stabilize the product and to increase its shelf-life in the case of emulsions;
- break the cell membranes in order to facilitate the extraction of the active ingredients in the case of pharmaceutical applications;
- modify the structure of the particles in the case of chemical applications and cellulose or unicellular organisms.

For most products, the main parameters defining the level of homogenization are the average particle size and the standard deviation.

In the known solutions, the pressure of the homogenizing apparatus is adjusted as described here below.

First, the optimum average particle size and standard deviation for a given fluid product are experimentally determined. Then, it is applied a pressure value necessary to obtain particles showing the calculated parameters. Maintaining the pressure is achieved by one of the following methods:

- periodically adjusting the pressure value by manual interventions;
- using a feedback system which receives as input the pressure level detected in the fluid product and forces the output to follow a set point.

Both methods act directly on the homogenizing pressure.

Nevertheless, the homogenizing pressure cannot be considered a reliable real-time indicator of the actual homogenizing level. In fact, the pressure and the fluid product being equal, different homogenizing levels can be obtained, for example due to modifications occurring in the new product fed to the apparatus and/or due to the wear of the components.

The known methods cannot track differences in the fluid product fed to the homogenizing apparatus.

In addition, the known methods do not consider changes caused in the fluid product by non-ideal components.

These situations are usually dealt with by designing a homogenizing apparatus able to assure a homogenizing level above a pre-established threshold, which corresponds to the most adverse conditions.

Having an oversized homogenizing apparatus raises risks of mechanical stress for some components, which may decrease their lifetime.

In addition, applying pressure values which are higher than requested is energy consuming.

Finally, applying pressure values which are higher than requested does not assure to reach the desired homogenizing level, as it causes an increase in temperature that may damage the fluid product. Part of the product could even be discarded due to thermal damage.

Document EP 1121973 A1 discloses a system for the supervision of a dispersion produced in a dispersing unit, in particular the homogenizing degree thereof, wherein it is proposed to couple one measurement sensor to the dispersing unit to achieve an in-line measurement of the homogenizing degree for the dispersion.

The sensor used in this document may be an ultrasonic sensor immersed in the fluid product or in contact with it. Thus, the sensor easily gets dirty and unreliable. In addition, it is prone to be damaged by high temperatures or high pressure of the fluid product, or by the aggressive chemical substances used during clean-in-place (CIP) and steam-in-place (SIP) phases.

Depending on applications, known methods and apparatuses for measuring the characteristics of a fluid product are based on different types of sensors.

From document US 5,473,934 it is known a method and apparatus for continuous monitoring of the composition of a fluid mixture travelling through a conduit. The relative component concentration of the fluid mixture of a liquid/liquid or solid/liquid mixture is monitored with a non-intrusive ultrasonic apparatus. The relative component concentration of the fluid mixture is determined by measuring ultrasonic propagation parameters and temperature, and by comparing these measured parameters to calibrated data based on analytical measurements of samples of the process fluid mixtures.

In the scientific publication "Monitoring Mixing Processes Using Ultrasonic Sensors and Machine Learning" by Alexander L. Bowler, Serafim Bakalis and Nicholas J. Watson, in Sensors 2020, 20(7), 1813, retrievable at https://doi.ora/ 10.3390/s20071813, a system based on measurements of acoustic impedance of a fluid is described.

A summary of ultrasonic methods for process monitoring liquid mixtures is given in the scientific publication "Process monitoring using ultrasonic sensor systems" by Bernd Henning, Jens Rautenberg, in Ultrasonics, Volume 44, Supplement, 22 December 2006, pages e1395-e1399.

There is still felt the need to increase accuracy, reliability, real-time data processing, and adaptability to varying conditions of fluid products, either in static or dynamic states.

In this context, the object of the present invention is to propose a method and an apparatus for measuring the sound speed in a fluid product contained in a pipe, which overcome the problems of the prior art cited above.

In particular, the object of the present invention is to propose a method and an apparatus for measuring the sound speed in a fluid product contained in a pipe, which achieve a higher measurement reliability than the known solutions and can work in real time with high precision for any type of fluid product.

A further object of the present invention is to provide a method and an apparatus for measuring the sound speed in a fluid product contained in a pipe, which do not affect the fluid product.

Another object of the present invention is to propose an apparatus for measuring the sound speed in a fluid product contained in a pipe, which is robust, less likely to wear over time, and easy to clean.

Another object of the present invention is to propose an apparatus for measuring the sound speed in a fluid product contained in a pipe, in which precautionary maintenance operations can be scheduled in a more efficient way.

The stated technical task and specified aims are substantially achieved by a method for measuring the sound speed in a fluid product contained in a pipe, the method comprising a main cycle which in turn comprises at least the following steps which are cyclically executed at least once:

- emitting a plurality of ultrasonic signals towards the fluid product in such a way that the ultrasonic signals pass through the fluid product, the ultrasonic signals being emitted by a plurality of emitting points located along the pipe;
- receiving the plurality of ultrasonic signals after they have passed through the fluid product, the ultrasonic signals being received by a plurality of receiving points located along the pipe, the number of receiving points being the same as the number of emitting points;
- selecting a group of ultrasonic signals received at the receiving points;
- for each selected ultrasonic signal of the group of ultrasonic signals, measuring a time of flight from the corresponding emitting point to the corresponding receiving point;
- for each selected ultrasonic signal of the group of ultrasonic signals, calculating a sound speed value as a ratio between a distance covered by the ultrasonic signal from the corresponding emitting point to the corresponding receiving point and the measured time of flight.

At the end of the main cycle, the method proceeds with a step of computing an average sound speed which is an average of at least a part of the sound speed values calculated in the main cycle.

In one application of the invention, the pipe is arranged downstream a high-pressure homogenizer in such a way that the method is performed on the fluid product coming from the high-pressure homogenizer.

According to one aspect of the invention, the average sound speed is an arithmetic mean of part or all the sound speed values calculated in the main cycle.

Preferably, the ultrasonic signals are simultaneously emitted by the plurality of emitting points.

In one embodment of the invention, the main cycle further comprises a step of amplifying the ultrasonic signals after they have been received at the receiving points.

In particular, the step of amplifying the ultrasonic signals comprises increasing the gain of the ultrasonic signals with time.

For example, the method comprises a step of measuring an amplitude of each ultrasonic signals after it is emitted by the corresponding emitting point and, in response to the measured amplitude being below a minimum value, the step of amplifying is performed.

According to one aspect of the invention, the step of selecting the group of ultrasonic signals comprises detecting any faults in the ultrasonic signals received at the receiving points and, in response to no fault being detected, selecting the corresponding ultrasonic signal.

In particular, the step of selecting the group of ultrasonic signals comprises:

- measuring an amplitude of each ultrasonic signal received at the corresponding receiving point;
- in response to a measured amplitude within a predefined conformity range, selecting the corresponding ultrasonic signal;
- in response to a measured amplitude outside the predefined conformity range, discarding the corresponding ultrasonic signal.

According to one embodiment of the invention, so-called Through-Transmission configuration, the emitting points are distributed along one side of the pipe and the receiving points are distributed along an opposite side of the pipe with respect to the fluid product. At each emitting point is arranged an emitter which consists of an ultrasonic sensor configured to emit ultrasonic signals, whereas at each receiving point is arranged a receiver which consists of an ultrasonic sensor configured to receive ultrasonic signals.

In this embodiment, the distance covered by each ultrasonic signal from the corresponding emitting point to the corresponding receiving point is the distance between the emitter which has emitted the ultrasonic signal and the corresponding receiver which has received said ultrasonic signal.

According to another embodiment, so-called Pulse Echo configuration, each emitting point coincides with one of the plurality of receiving points so as to originate a transceiving point. The transceiving points are distributed along a same side of the pipe. At each transceiving point is arranged an ultrasonic transducer configured to emit and receive ultrasonic signals. The ultrasonic signals emitted by the ultrasonic transducer are reflected back by reflecting means arranged on an opposite side of the pipe with respect to the fluid product.

In this embodiment, the distance covered by each ultrasonic signal from the corresponding emitting point to the corresponding receiving point is twice the distance between the ultrasonic transducer and the reflecting means.

According to one aspect of the invention, the method further comprises a dimensional measurement procedure which is performed before starting the main cycle of the method.

The dimensional measurement procedure comprises calculating a thickness of the pipe and calculating the distance covered by the ultrasonic signal from the corresponding emitting point to the corresponding receiving point.

In particular, in one embodiment (the Pulse Echo configuration), calculating the thickness of the pipe comprises at least the following steps:

- measuring the sound speed at different temperatures in a predefined sample made of the same material of the pipe;
- measuring the time of flight in the pipe in a condition of emptiness, which means no fluid is contained in the pipe;
- detecting the temperature of the pipe;
- calculating the thickness of the pipe by multiplying the sound speed measured at the detected temperature and the time of flight measured in the pipe.

In the Pulse Echo configuration, calculating the distance covered by the ultrasonic signal from the corresponding emitting point to the corresponding receiving point comprises an initial cycle in turn comprising at least the following steps which are cyclically executed at least once:

- emitting a plurality of ultrasonic signals towards a selected fluid product contained in the pipe in such a way that said ultrasonic signals pass through the selected fluid product, the ultrasonic signals being emitted by the plurality of emitting points;
- receiving the plurality of ultrasonic signals after they have passed through the selected fluid product, the ultrasonic signals being received by the plurality of receiving points;
- detecting any faults in the ultrasonic signals received at the receiving points;
- for each ultrasonic signal of the plurality of ultrasonic signals, in response to no fault being detected, measuring a time of flight from the corresponding emitting point to the corresponding receiving point;
- for each ultrasonic signal of the plurality of ultrasonic signals, in response to no fault being detected, calculating a distance covered by the ultrasonic signal from the corresponding emitting point to the corresponding receiving point as a sum of the thickness of the pipe and an internal diameter of the pipe.

At the end of the initial cycle, the dimensional measurement procedure further comprises a step of computing an average distance which is an average of at least a part of the distances calculated in the initial cycle.

Calculating the distance covered by the ultrasonic signal from the corresponding emitting point to the corresponding receiving point further comprises a step of measuring the sound speed at different temperature in a selected fluid product, which is performed before the initial cycle.

In particular, the average distance is an arithmetic mean of part or all the distances calculated in initial cycle.

The stated technical task and specified aims are substantially achieved by an apparatus for measuring the sound speed in a fluid product contained in a pipe, the apparatus comprising:

- a pipe having an internal cavity for the passage of the fluid product, the internal cavity having a variable diameter across the length the pipe;
- a plurality of ultrasonic emitters installed on board of the pipe and configured to emit ultrasonic signals;

- a plurality of ultrasonic receivers installed on board of the pipe and outside the internal cavity, the ultrasonic receivers being distributed along the length of the pipe and being configured to detect the ultrasonic signals, the number of ultrasonic receivers being the same as the number of ultrasonic emitters.

The apparatus further comprises a control unit configured to:

- command the ultrasonic emitters to emit a plurality of ultrasonic signals towards the fluid product in such a way that the ultrasonic signals pass through the fluid product;
- command the ultrasonic receivers to receive the plurality of ultrasonic signals emitted by the ultrasonic emitters after they have passed through the fluid product,
- select a group of ultrasonic signals received by the ultrasonic receivers;
- for each selected ultrasonic signal of the group of ultrasonic signals, measure a time of flight from the corresponding ultrasonic emitter to the corresponding ultrasonic receiver point;
- for each selected ultrasonic signal of the group of ultrasonic signals, calculate a sound speed value as a ratio between a distance covered by the ultrasonic signal from the corresponding ultrasonic emitter to the corresponding ultrasonic receiver and the measured time of flight;
- compute an average sound speed which is an average of at least a part of the calculated sound speed values.

Preferably, the control unit is also configured to amplify the ultrasonic signals after they have been received by the ultrasonic receivers.

According to one embodiment of the invention, the pipe comprises:

- an outer tube;
- an inner tube coaxially arranged inside the outer tube, the inner tube having an internal surface which delimits the internal cavity;
- a plurality of housings located in an external surface of the inner tube, each of the ultrasonic receivers being arranged in one of the housings.

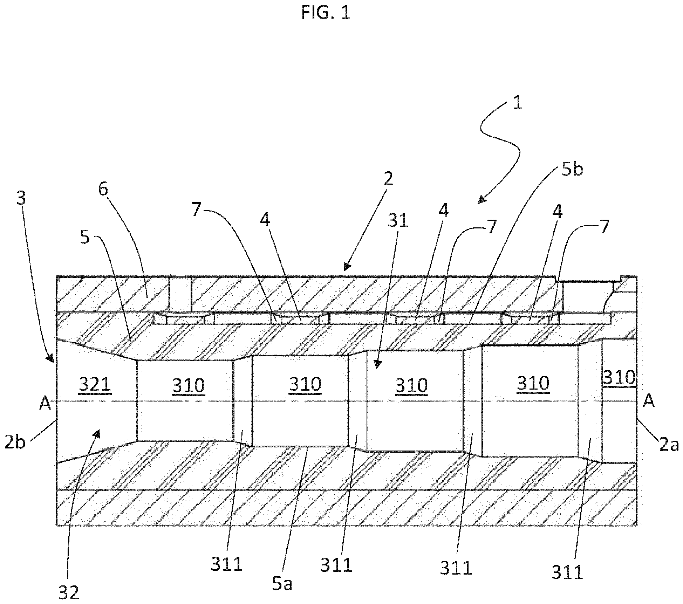

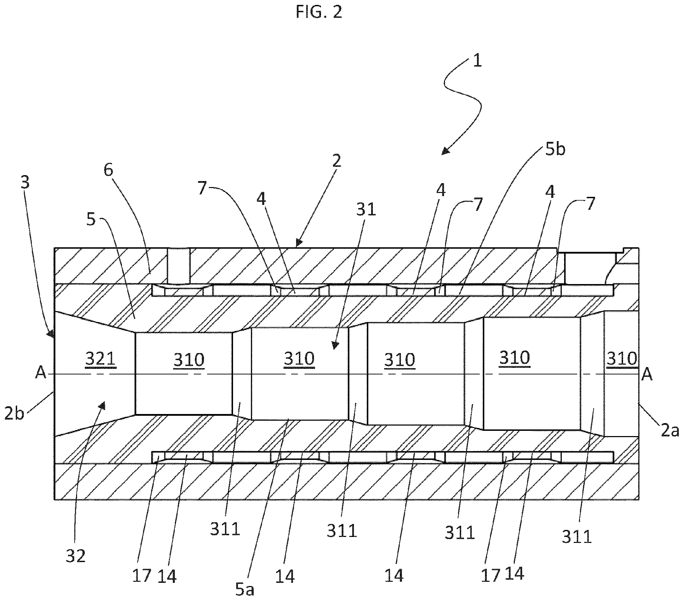

Further characteristics and advantages of the present invention will more fully emerge from the non-limiting description of a preferred but not exclusive embodiment of a method and an apparatus for measuring the sound speed in a fluid product contained in a pipe, as illustrated in the accompanying drawings in which figures 1 and 2 illustrate cross-sectional views of a part of an apparatus for measuring the sound speed in a fluid product contained in a pipe, according to two different embodiments of the present invention;

- figure 3 illustrates the use of the apparatus according to the present invention for in-line measuring the sound speed in a fluid product coming from a dispersion unit;
- figure 4 is a schematic view of the apparatus according to the present invention;

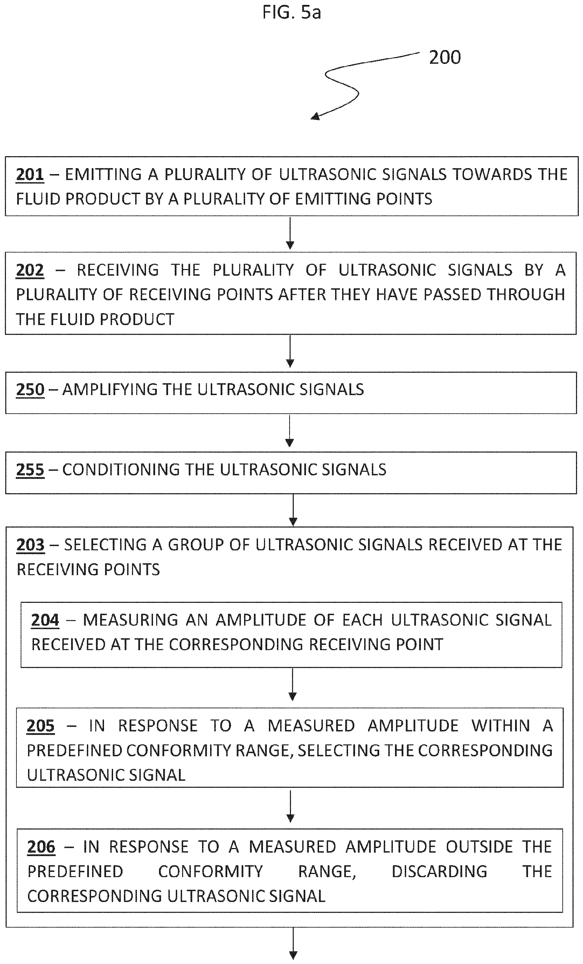

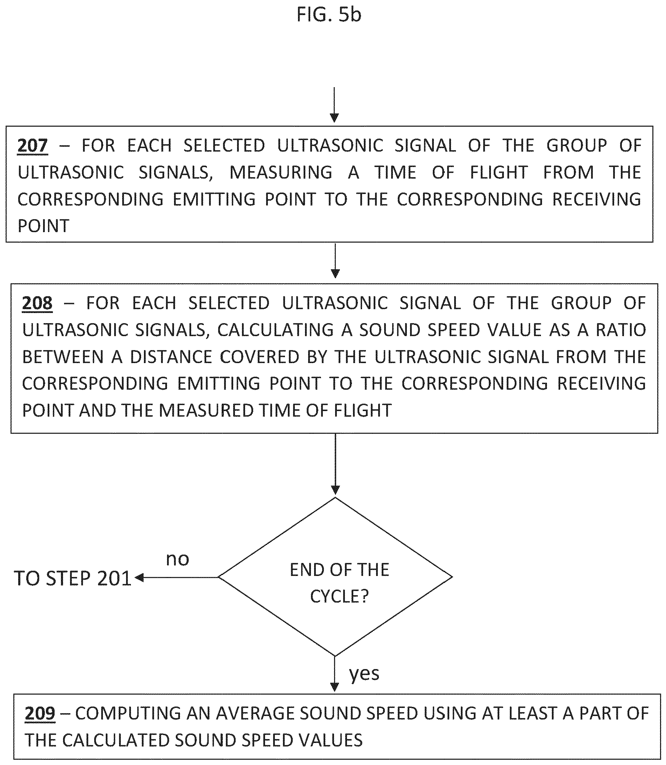

- figures 5a and 5b illustrate a flow diagram of a method for measuring the sound speed in a fluid product contained in a pipe, according to the present invention;

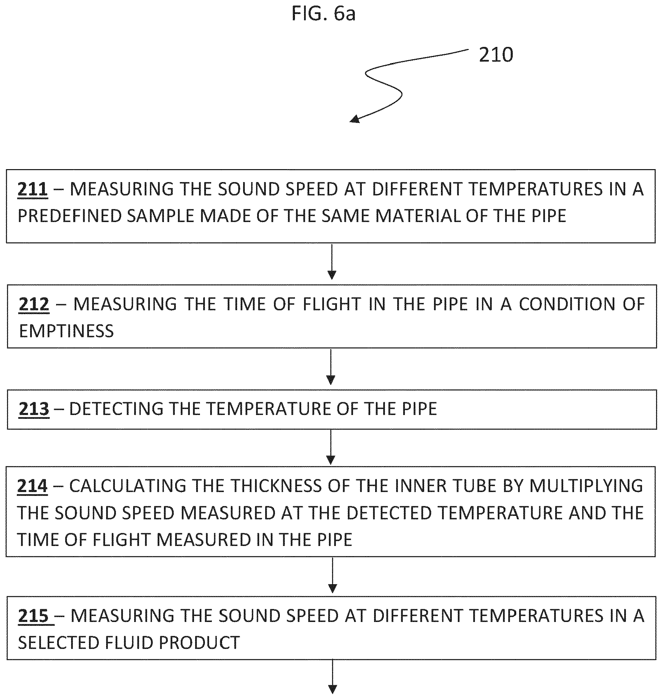

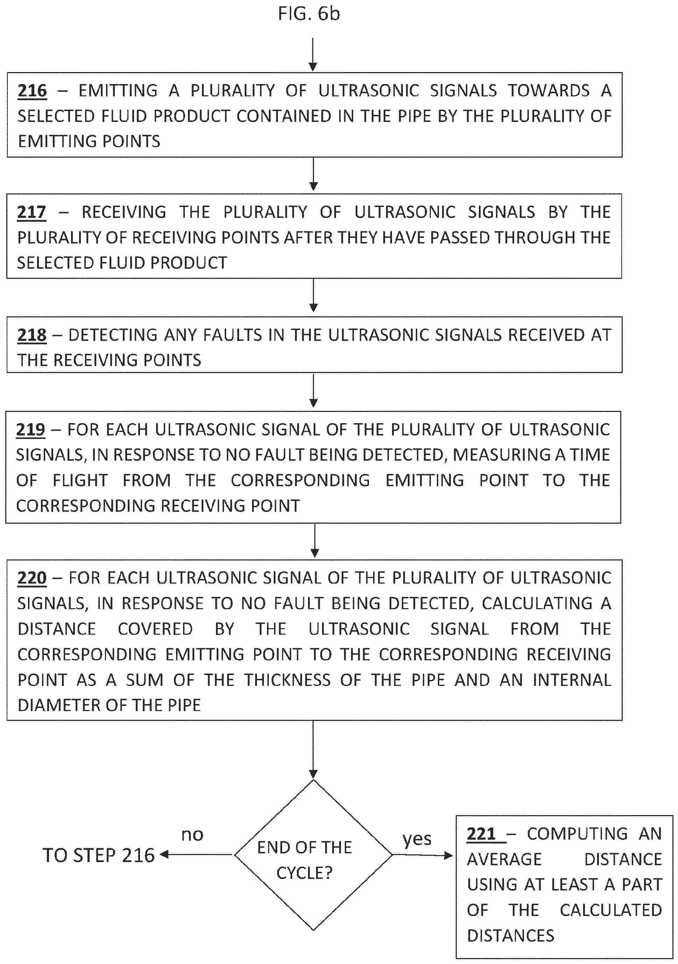

- figures 6a and 6b illustrate a flow diagram of a dimensional measurement procedure of the method according to the present invention;
- figures 7a and 7b illustrates two different curves of gain amplification over time, respectively with a linear and a logarithmic development;
- figure 8 illustrates a tendency curve for a reference fluid product.

Number 1 denotes an apparatus for measuring the sound speed in a fluid product. In particular, the apparatus 1 can measure the sound speed in a fluid product either in static or dynamic conditions.

In one application, the apparatus 1 is used for in-line measuring the sound speed in a fluid product coming from a dispersion unit 100.

In a preferred embodiment, the dispersion unit 100 is a high-pressure homogenizer comprising a volumetric piston pump and a homogenizing valve arranged downstream of the volumetric piston pump.

In particular, the high-pressure homogenizer 100 operates with a pressure up to 4000 bar.

The dispersion unit 100 has an input 100a for the fluid to be homogenized and an output 101b for a homogenized fluid product.

The apparatus 1 comprises a pipe 2 having an inlet 2a and an outlet 2b for the fluid product. The pipe 2 has longitudinal axis indicated with A-A.

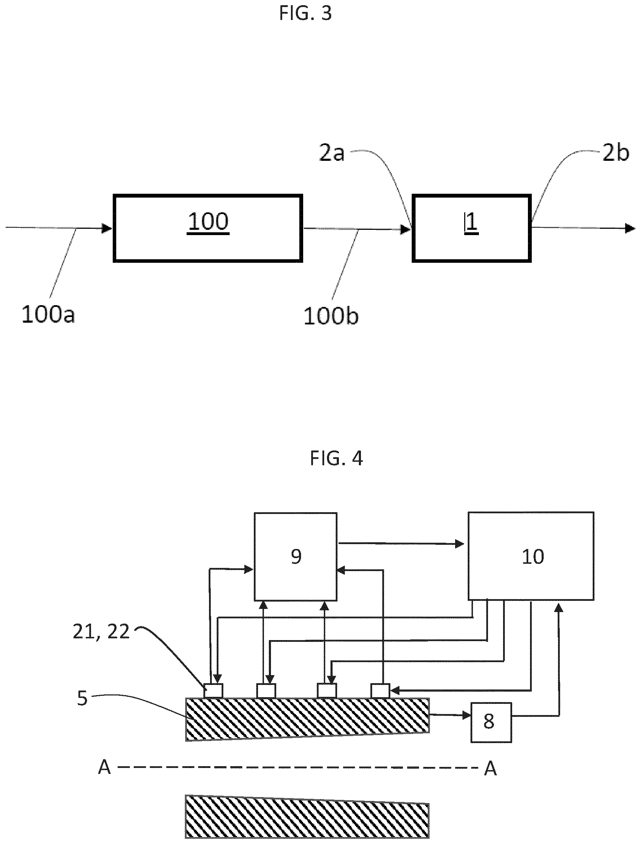

In the embodiment of figure 3, the pipe 2 is arranged downstream the dispersion unit 100. In particular, the inlet 2a of the pipe 2 is in fluid communication with the output 100b of the dispersion unit 100 so as to receive the homogenized fluid product from the dispersion unit 100.

The pipe 2 has an internal cavity 3 for the passage of the fluid product received from the dispersion unit 100.

The internal cavity 3 extends from the inlet 2a to the outlet 2b of the pipe 2.

The diameter of the internal cavity 3 at the inlet 2a and at the outlet 2b of the pipe 2 is substantially the same.

Originally, the internal cavity 3 has a variable diameter across the length of the pipe 2.

In particular, the internal cavity 3 has at least one first tract 31 with a tapering development from the inlet 2a towards the outlet 2b of the pipe 2.

In other words, the first tract 31 has a convergent shape from the inlet 2a towards the outlet 2b of the pipe 2.

In particular, the tapering development of the first tract 31 is discrete, which means that the diameter of the first tract 31 decreases in discrete steps from the inlet 2a towards the outlet 2b.

Preferably, the first tract 31 of the internal cavity 3 is formed by a plurality of substantially cylindrical portions 310 which are joined by frusto-conical portions 311.

The cylindrical portions 310 have corresponding diameters that decrease from the inlet 2a towards the outlet 2b of the pipe 2.

In the embodiments illustrated in figures 1 and 2, the first tract 31 comprises five cylindrical portions 310 which are joined by four frusto-conical portions 311.

The internal cavity 3 preferably has a second tract 32 originating from the first tract 31 and ending at the outlet 2b of the pipe 2.

The second tract 32 has a tapering development from the outlet 2b of the pipe 2 towards the first tract 31.

In other words, the second tract 32 has a convergent shape from the outlet 2b of the pipe 2 towards the first tract 31.

In particular, the second tract 32 consists of a frusto-conical portion 321 connecting the first tract 31 to the outlet 2b of the pipe 2.

In particular, the last cylindrical portion 310 of the first tract 31 is connected to the frusto-conical portion 321 of the second tract 32.

The apparatus 1 further comprises a plurality of ultrasonic transducers 4 configured at least to detect ultrasonic signals.

As it will be explained later, in one embodiment of the proposed method (called "Through-Transmission") the electronic transducers 4 are only configured to detect (i.e. receive) ultrasonic signals.

In another embodiment of the proposed method (called "Pulse Echo") the electronic transducers 4 are configured to emit and receive ultrasonic signals.

In this context, ultrasonic signals and ultrasonic waves are synonyms.

The ultrasonic transducers 4 are installed on board of the pipe 2.

In particular, the ultrasonic transducers 4 are distributed along the length of the pipe 2.

Preferably, the ultrasonic transducers 4 are equally spaced along the length of the pipe 2.

According to one embodiment of the invention, the distance between two consecutive ultrasonic transducers 4 along the pipe 2 is comprised between 30 mm and 60 mm. In particular, the distance between two consecutive ultrasonic transducers 4 is selected so as to avoid interference issues.

Preferably, each ultrasonic transducer 4 is configured to receive ultrasonic waves having a frequency comprised between 0.5 MHz and 20 MHz.

More preferably, each ultrasonic transducer 4 is configured to receive ultrasonic waves having a frequency comprised between 2 MHz and 10 MHz.

In particular, the choice of the working frequency range depends on the acoustic impedance of the fluid product. In fact, ultrasonic transducers 4 are selected for working at frequencies so as to detect the ultrasonic waves passing through a specific fluid product having a specific acoustic impedance.

In a preferred embodiment, the ultrasonic transducers 4 are piezoelectric ceramic sensors.

In a preferred embodiment, all the ultrasonic transducers 4 are identical.

In alternative embodiment, the ultrasonic transducers 4 may vary among each other in size and/or signal frequency, and/or signal amplitude.

According to the illustrated embodiments, the pipe 2 comprises an inner tube 5 and an outer tube 6.

The inner tube 5 is coaxial with and internally arranged within the outer tube 6.

The inner tube 5 delimits the internal cavity 3. In particular, the internal cavity 3 is delimited by an internal surface 5a of the inner tube 5.

In particular, the internal surface 5a of the inner tube 5 has an initial part with a tapering development from the inlet 2a towards the outlet 2b of the pipe 2 so as to delimit the corresponding tapering development of the first tract 31 of the internal cavity 3.

In particular, the tapering development of the initial part of the internal surface 5a is discrete, which means that the internal diameter of inner tube 5 in the initial part decreases in discrete steps from the inlet 2a towards the outlet 2b.

The last part of the internal surface 5a of the inner tube 5 has an inverse tapering development with respect to the first part so as to delimit the corresponding second tract 32 of the internal cavity 3.

Preferably, the inner tube 5 is made of a plastic material. Thus, the ultrasonic signals can pass through the inner tube 5.

More preferably, the inner tube 5 is made of PEEK.

Alternatively, the inner tube 5 is made of PTFE.

In the embodiments illustrated in figures 1 and 2 the ultrasonic transducers 4 are arranged between the inner tube 5 and the outer tube 6.

In particular, the inner tube 5 has a plurality of housings 7 for receiving the ultrasonic transducers 4.

Preferably, the housings 7 are obtained as inward recesses of an external surface 5b of the inner tube 5.

In particular, each housing 7 is associated to one of the cylindrical portions 310 of the first tract 31.

Arranging the ultrasonic transducers 4 in the inner tube 5 but not facing the internal cavity 3 avoids a direct contact with the fluid product which flows in the internal cavity 3. This arrangement also introduces a delay in the received ultrasonic signals, the delay being generated by the material of the inner tube 5.

Speaking of signals, the inner tube 5 represents a delay line.

According to one aspect of the invention, the ultrasonic transducers 4 are glued to the inner tube 5. In particular, the ultrasonic transducers 4 are placed inside the housings 7 and glued to the external surface 5b of the inner tube 5.

According to another embodiment (not shown), the ultrasonic transducers 4 are mounted on an outer surface of the pipe 2.

For example, the ultrasonic transducers 4 are screwed externally to the pipe 2.

In particular, the ultrasonic transducers 4 are mounted externally to the outer tube 6. For example, the ultrasonic sensors 4 are screwed externally to the outer tube 6 so as to arrive close to the inner tube 5.

Preferably, in this embodiment an ultrasonic gel is deposited between the ultrasound transducers 4 and the inner tube 5 for assuring the transmission of the ultrasonic signals.

Number 200 indicates a method for measuring the sound speed in a fluid product contained in a pipe, such as the pipe 2 of the apparatus 1 described above.

Preferably, the method 200 is carried out with the proposed apparatus 1.

Alternatively, the method 200 may be carried out with other apparatuses which are different from the proposed apparatus 1.

The method 200 comprises a main cycle of steps which are cyclically executed one or more times.

Preferably, the main cycle of the method 200 starts with a step of emitting a plurality of ultrasonic signals towards the fluid product contained in the pipe 2 in such a way that the ultrasonic signals pass through the fluid product. This step of emitting is indicated with number 201.

In particular, the ultrasonic signals are emitted by a plurality of emitting points 21 located along the pipe 2.

Preferably, the ultrasonic signals are simultaneously emitted by the plurality of emitting points 21.

After the ultrasonic signals have passed through the fluid product, said ultrasonic signals are received by a plurality of receiving points 22 located along the pipe 2. This step of receiving is indicated with number 202.

In particular, the number of receiving points 21 is the same as the number of emitting points 22. Preferably, each emitting point 21 of the plurality of emitting points 21 is coupled to a corresponding receiving point 22 of the plurality of receiving points 22.

According to one embodiment, referred to as "Pulse Echo", each emitting point 21 coincides with one of the plurality of receiving points 22 so as to originate a transceiving point.

In other words, in the Pulse Echo configuration each transceiving point acts both as an emitting point and a receiving point.

The transceiving points are distributed along one side of the pipe 2. In particular, the transceiving points are distributed along the same side of the pipe 2 with respect to the fluid product.

At each transceiving point a transceiver is arranged, which consists of an ultrasonic transducer configured to emit and receive ultrasonic signals.

The ultrasonic signals emitted by the ultrasonic transducers located on one side of the pipe 2 are reflected back by reflecting means which are arranged on an opposite side of the pipe 2 with respect to the fluid product.

With reference to the proposed apparatus 1, the ultrasonic transducers 4 constitute the transceivers of the Pulse Echo configuration. In particular, the ultrasonic transducers 4 of the apparatus 1 are configured to emit and receive ultrasonic signals.

This embodiment is shown in figure 1.

Preferably, each cylindrical portion 310 of the first tract 31 of the internal cavity 3 is coupled to one of the ultrasonic transducers 4. Each ultrasonic transducer 4 is arranged inside one of the housings 7 obtained in the inner tube 5.

The waves generated by the ultrasonic transducers 4 pass through the fluid product contained in the internal cavity 3 and are reflected back by the internal surface 5a of the inner tube 5. Preferably, the internal surface 5a is made of metal.

In this case, the internal surface 5a of the inner tube 5 constitutes the reflecting means.

Alternatively, the reflecting means comprise a plurality of reflecting elements mounted on a side opposite to the housings 7 with respect to the internal cavity 3.

According to another embodiment, referred to as "Through-Transmission", the emitting points 21 are distributed along one side of the pipe 2 and the receiving points 22 are distributed along an opposite side of the pipe 2 with respect to the fluid product.

At each emitting point 21 an emitter is arranged, which consists of an ultrasonic sensor configured to emit ultrasonic signals.

At each receiving point 22 a receiver is arranged, which consists of an ultrasonic sensor configured to receive ultrasonic signals.

With reference to the proposed apparatus 1, in the Through-Transmission configuration the ultrasonic transducers 4 are configured to act only as ultrasonic receivers of ultrasonic signals.

Therefore, the ultrasonic transducers 4 are also referred to as "ultrasonic receivers" for the Through-Transmission configuration.

This embodiment is shown in figure 2.

In this embodiment, the apparatus 1 further comprises a group of ultrasonic emitters 14 configured to act as emitters of ultrasonic signals.

Preferably, each cylindrical portion 310 of the first tract 31 of the internal cavity 3 is coupled to one of the ultrasonic receivers 4 and to one of the ultrasonic emitters 14.

Preferably, each ultrasonic receiver 4 is arranged inside one of the housings 7 obtained in the inner tube 5.

Preferably, the ultrasonic emitters 14 are arranged between the inner tube 5 and the outer tube 6 in a plurality of further housings 17 obtained in the inner tube 5.

The further housings 17 for the ultrasonic emitters 14 are obtained as inward recesses of the external surface 5b of the inner tube 5 and are located oppositely to the housings 7 for the ultrasonic receivers 4 with respect to the internal cavity 3.

The waves generated by the ultrasonic emitters 14 pass through the fluid product contained in the internal cavity 3 and are detected by the ultrasonic receivers 4.

After the step of receiving 202, the main cycle of the method 200 proceeds with a step of selecting a group of ultrasonic signals received at the receiving points 22. This step is indicated with number 203.

In one embodiment, the selection comprises detecting any faults in the ultrasonic signals received at the receiving points 22 and, in response to no fault being detected, selecting the corresponding ultrasonic signal.

Preferably, faults are correlated to amplitudes of the ultrasonic signals being out of a predefined conformity range.

In particular, the step of selecting 203 comprises measuring an amplitude of each ultrasonic signal received at the corresponding receiving point 22. This step is indicated with number 204.

For example, the amplitude is measured by a peak detector of the apparatus 1.

A measured amplitude within the predefined conformity range means that no fault is detected. Therefore, in response to a measured amplitude within the predefined conformity range, the corresponding ultrasonic signal is selected. This step is indicated with 205.

On the contrary, a measured amplitude outside the predefined conformity range means that a fault is detected. Therefore, in response to a measured amplitude outside the predefined conformity range, the corresponding ultrasonic signal is discarded, which means it is not selected. This step is indicated with 206.

Alternatively to detecting faults or in addition to, the step of selecting 203 may be performed using known gating techniques.

For each selected ultrasonic signal of the group of ultrasonic signals, the main cycle proceeds with a step of measuring a time of flight of the ultrasonic signal from the corresponding emitting point 21 to the corresponding receiving point 22. This step is indicated with number 207.

In practice, the time of flight is measured for all the selected ultrasonic signals that are received at the corresponding receiving points 22.

In this context, the time of flight is also referred to as travel time and is indicated with $t_F$.

The time of flight of a signal is the time it takes for said signal to travel from an emitter to a receiver.

After having measured the time of flight $t_F$ for a selected ultrasonic signal, a sound speed value is calculated as a ratio between the distance covered by the ultrasonic signal and the measured time of flight $t_F$. This step is indicated with number 208.

In particular, the distance covered by the ultrasonic signal is the distance from the corresponding emitting point 21 to the corresponding receiving point 22 and is indicated with d.

In practice, a sound speed value is calculated for all the ultrasonic signals which have been selected.

The sound speed value is indicated with vs.

For each selected ultrasonic signal, the sound speed value is calculated with the following formula:

$$(1) \qquad\qquad v_S = d \, / \, t_F$$

In the Pulse Echo configuration, the distance covered by each ultrasonic signal from the corresponding emitting point 21 to the corresponding receiving point 22 is twice the distance between the ultrasonic transducer 4 and the reflecting means, in particular the internal surface 5a of the inner tube 5. The reason is that the ultrasonic transducer 4 is configured to emit and receive the ultrasonic signals, which are reflected back by the internal surface 5a.

In the Through-Transmission configuration, the distance covered by each ultrasonic signal from the corresponding emitting point 21 to the corresponding receiving point 22 is the distance between the ultrasonic emitter 14 which has emitted said ultrasonic signal and the corresponding ultrasonic receiver 4 which has received said ultrasonic signal.

As already stated above, the steps of the main cycle can be cyclically repeated for a pre-established number of times, which can be adjusted depending on the needs.

In the Pulse Echo configuration, a plurality of sound speed values is usually calculated for each transceiving point.

In the Through-Transmission configuration, a plurality of sound speed values is usually calculated for each pair of emitting point 21 and receiving point 22.

For example, when no fault is detected in the ultrasonic signals received at a given receiving point 22, the number of sound speed values which are calculated coincides with the pre-established number of times that the steps of the main cycle are performed.

When one or more faults are detected in the ultrasonic signals received at a given receiving point 22, the number of sound speed values which are calculated is lower than pre-established number of times that the steps of the main cycle are performed.

When the main cycle ends, the method 200 further comprises a step of computing an average sound speed. This step indicated with number 209. In particular, the step of computing the average sound speed 209 consists in computing an average of at least a part of the sound speed values calculated in the main cycle.

In this context, the average sound speed is an arithmetic mean of part or of all the sound speed values calculated in the main cycle.

In one embodiment of the invention, the average sound speed is computed using all the sound speed values calculated in the main cycle.

In the illustrated embodiments, the emitting points 21 are four and the receiving points 22 are four.

Assuming to repeat the steps of main cycle at least 32 times, the calculated sound speed values are 128 in case no fault is detected or lower than 128 in case faults are detected.

The average value is computed on 128 (or less) calculated sound speed values.

For example, only the last 20 calculated sound speed values are used for the average computation.

In the proposed apparatus 1, each of the calculated sound speed values is referred to one of the cylindrical portions 310 of the first tract 31. Since the cylindrical portion 310 have different diameters, the product fluid has different speeds across each portion.

The speed of the fluid product affects the measurement of the time of flight, introducing an error.

Measuring the time of flight in portions having a different diameter (i.e., different cross-section) introduces errors of different magnitude. The relationship between the error in the time of flight and the speed of the fluid is non-linear, in particular it depends on the properties of the fluid product.

Computing an average of the sound speed across cylindrical portions 310 having different diameters allows to increase accuracy since the average is not affected by the specific dimension of the internal cavity 3.

The accuracy in the measure may be further increased in case of a variable flowrate.

According to one aspect of the invention, the main cycle further comprises a step of amplifying the ultrasonic signals after they have been received at the receiving points 22. This step is indicated with number 250.

In particular, the amplification is performed by increasing the gain of the ultrasonic signals with time.

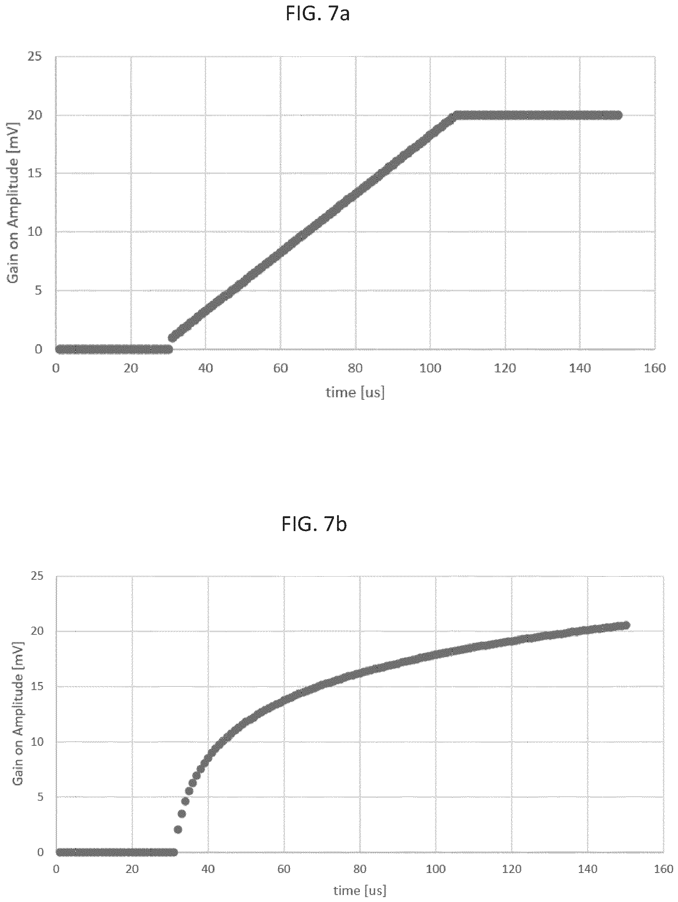

For example, the amplification is based on a look up table or on a curve of gain coefficients over time. In particular, the gain coefficients increase over time. Figure 7a illustrates a curve of gain coefficients having a linear development over time, whereas figure 7b illustrates a curve having a logarithmic development over time. These are mere examples; other curves of gain amplitude may be used.

Preferably, the amplification is performed only on ultrasonic signals which are attenuated too much and would not be detected at the receiving points 22.

In particular, before the step of amplifying the ultrasonic signals 250, it is performed a step of measuring an amplitude of each ultrasonic signal.

In response to the measured amplitude being below a predefined minimum value, the corresponding ultrasonic signal is amplified.

Amplification is particularly advantageous in Pulse Echo configuration since the ultrasonic signals which are reflected back may show a significant attenuation due to crossing the fluid product twice.

Amplification allows to increase the gain of the ultrasonic signals over time after the reflection, avoiding increasing the signals while crossing the delay line. As a matter fact, the material of the inner tube 5, such as PEEK, does not attenuate the ultrasonic signals or at least produces a neglectable attenuation, so the ultrasonic signals crossing the PEEK need not to be amplified. Should it be, there would be a risk of saturation.

Amplification allows to increase the power of the ultrasonic signals, which sometimes is significantly weakened by passing through fluid products having a high attenuating power. Without amplification, the received ultrasonic signals would be too weak.

Preferably, the main cycle further comprises a step of conditioning the ultrasonic signals after they have been received at the receiving points 22. This step is indicated with number 255.

Conditioning is preferably performed after having amplified the ultrasonic signals at the step 250.

In one embodiment, conditioning comprises filtering the noise.

In one embodiment, the apparatus 1 comprises one or more of the following components for performing amplification and filtering: bandwidth-adjustable low-noise amplifiers, ultralow noise preamplifiers, and amplifiers with a wide gain range and programmable post-amplifiers (for example VGA). These components are known and will not be described here.

In one embodiment, the analog gain for reception is adjustable in the range from -31 dB to 65 dB in 0.5 Db steps.

In order to assure high accuracy in calculating the sound speed in a fluid product using formula (1) it is essential to measure the time of flight with accuracy at each receiving point 22, and to know the exact distance d covered by the ultrasonic signal from the corresponding emitting point 21 to the corresponding receiving point 22.

Preferably, the method 200 comprises a dimensional measurement procedure 210 which is performed before starting the main cycle.

Since the receiving points 22 are located along the pipe 2 but not in contact with the fluid product, the measure of the time of flight of the ultrasonic signal from an emitting point 21 to a receiving point 22 is affected by the delay introduced by the thickness of the pipe 2.

In the preferred embodiment, the receiving points 22 are located in the housings 7 of the inner tube 5 of the pipe 2.

Thus, the contribution of the material of the inner tube 5 (for example PEEK) to the overall time of flight shall be recognized and isolated.

The dimensional measurement procedure 210 comprises calculating the thickness of the inner tube 5 and calculating the distance d covered by the ultrasonic signal from the corresponding emitting point 21 to the corresponding receiving point 22.

The dimensional measurement procedure 210 for the Pulse Echo configuration is detailed below. An analogous procedure is used for the Through-Transmission configuration.

Calculating the thickness of the inner tube 5 starts with a step of measuring the sound speed at different temperatures in a predefined sample made of the same material of the inner tube 5. This step is indicated with number 211.

In particular, the predefined sample is a plan-parallel plate made of PEEK having known dimensions.

The step of measuring the sound speed in the predefined sample 211 is performed using known methods and systems.

At the end of the step 211, for the material of the inner tube 5 it is obtained a curve of the sound speed (indicated as $v_{S-delay}$) as a function of the temperature T.

Then, the time of flight in the inner tube 5 is measured in a condition of emptiness, which means no fluid is in the internal cavity 3. This step is indicated with number 212.

It has to be noticed that the ultrasound waves emitted by the emitting points 21 cross the thickness of the inner tube 5 and are reflected back by the internal surface 5a due to the difference in impedance between the medium of the inner tube 5 and the medium of the empty tube.

The temperature of the inner tube 5 is also detected, for example by a temperature sensor applied to the inner tube 5. This step is indicated with number 213.

The thickness of the inner tube 5, indicated with th, is then calculated using the inverse of formula (1), that in this case is:

$$(2) \qquad\qquad th = v_{S-delay} * t_{F-delay}$$

where $v_{S-delay}$ is the sound speed in the inner tube 5 retrieved from the curve at the specific detected temperature and $t_{F-delay}$ is the time of flight measured in the inner tube 5. In particular, the time of flight $t_{F-delay}$ is measured considering that the ultrasound waves are reflected back by the first internal surface 5a of the inner tube 5 that is met by the waves. The step of calculating the thickness of the inner tube is indicated with number 214.

After the thickness th of the inner tube 5 has been calculated, the dimensional measurement procedure 210 continues with calculating the distance d covered by the ultrasonic signal from the corresponding emitting point 21 to the corresponding receiving point 22.

Calculating the distance d starts with a step of measuring the sound speed at different temperature in a selected (i.e. known) fluid product. This measurement is performed at different temperatures with known methods and systems and is indicated with number 215.

At the end of the step 215, for the selected fluid product it is obtained a curve of the sound speed (indicated as $V_{S\text{-}fluid}$) as a function of the temperature T.

Then, it is performed an initial cycle of steps which are cyclically executed one or more times before the main cycle of the method 200.

Preferably, the initial cycle starts with a step of emitting a plurality of ultrasonic signals towards the selected fluid product contained in the pipe 2 in such a way that the ultrasonic signals pass through the selected fluid product. This step is indicated with number 216.

The ultrasonic signals are emitted by the plurality of emitting points 21 located along the pipe 2.

Preferably, the ultrasonic signals are simultaneously emitted by the plurality of emitting points 21.

After the ultrasonic signals have passed through the selected fluid product, said ultrasonic signals are received by the plurality of receiving points 22 located along the pipe 2 (this is step 217).

Then, it is measured the time of flight of each ultrasonic signal from the corresponding emitting point 21 to the corresponding receiving point 22. This step is indicated with number 219.

As already said, the time of flight of the ultrasonic signal is affected by the delay of the pipe 2.

In this context, the time of flight measured at the step 219 is referred to as the "overall time of flight" and is indicated as $t_F$.

The overall time of flight $t_F$ is the sum of the time of flight in the selected fluid product (indicated as $t_{F\text{-}fluid}$) and the time of flight $t_{F\text{-}delay}$ in the inner tube 5. Therefore, the overall time of flight is:

$$(3) \qquad t_F = t_{F\text{-}fluid} + t_{F\text{-}delay}$$

Analogously, the distance d is the sum of the internal diameter ø of the inner tube 5 and the thickness th of the inner tube 5.

Thus, it is possible to calculate the distance d using the inverse of the formula (1), that in this case is:

$$(4) \qquad d = \text{ø} + th = v_{S\text{-}fluid} * (t_F - t_{F\text{-}delay}) + v_{S\text{-}delay} * t_{F\text{-}delay}$$

The step of calculating the distance d is indicated with 220.

The calculated distance d is used in the main cycle for calculating the sound speed values at step 208.

In practice, a distance value is calculated for all the ultrasonic signals for which no fault is detected at the corresponding receiving points 22.

As already stated above, in the Pulse Echo configuration the distance d covered by each ultrasonic signal from the corresponding emitting point 21 to the corresponding receiving point 22 is twice the distance between the ultrasonic transducer 4 and the reflecting means, in particular the internal surface 5a of the inner tube 5.

An analogous procedure may be applied in the Through-Transmission configuration, where the distance d covered by each ultrasonic signal from the corresponding emitting point 21 to the corresponding receiving point 22 is the distance between the ultrasonic emitter 14 which has emitted said ultrasonic signal and the corresponding ultrasonic receiver 4 which has received said ultrasonic signal.

Preferably, the initial cycle also comprises a step of detecting any faults in the ultrasonic signals received at the receiving points 22, this step being indicated with number 218.

The step of detecting faults 218 is analogous to detecting faults in the step of selecting 203 which is performed during the main cycle of the method 200.

In particular, the step of detecting faults 218 comprises the step of measuring an amplitude 204 of the ultrasonic signal and in response to the measured amplitude being within or outside a predefined conformity range, confirming that no fault is detected or that a fault is detected (respectively step 205 and step 206).

In response to no fault being detected at a receiving point 22, the step of measuring a time of flight 219 is performed.

In other words, the time of flight is measured for all the ultrasonic signals for which no fault is detected at the corresponding receiving points 22.

As already stated above, the steps of the initial cycle can be cyclically repeated for a pre-established number of times, which can be adjusted depending on the needs.

When no fault is detected in the ultrasonic signal received at the receiving point 22, the number of distance values which are calculated coincides with the pre-established number of times that the steps of the initial cycle are performed.

When one or more faults are detected in the ultrasonic signal received at the receiving point 22, the number of distance values which are calculated is lower than pre-established number of times that the steps of the initial cycle are performed.

When the initial cycle ends, the method 200 proceeds with a step of computing an average distance. This step is indicated with number 221.

In particular, the step of computing the average distance 221 consists in computing an average of at least a part of the distance values calculated in the initial cycle.

In this context, the average distance is an arithmetic mean of part or all the distance values calculated in the initial cycle.

After the initial cycle ends, the main cycle of the method 200 can start. The apparatus 1 further comprises a temperature sensor 8 configured to detect the temperature of the pipe 2, in particular of the inner tube 5.

In addition, the apparatus 1 comprises an acquisition unit 9 configured to acquire the ultrasonic signals received by the ultrasonic receivers (for Pulse Echo or Through-Transmission).

The acquisition unit 9 is connected to a control unit 10 which is configured to measure the sound speed in the fluid product contained in the pipe 2.

In particular, the control unit 10 is configured at least to:

- command the ultrasonic emitters to emit a plurality of ultrasonic signals towards the fluid product contained in the pipe 2 in such a way that said ultrasonic signals pass through the fluid product;
- command the ultrasonic receivers to receive the plurality of ultrasonic signals emitted by the ultrasonic emitters after they have passed through the fluid product;
- select a group of ultrasonic signals received by the ultrasonic receivers;
- for each selected ultrasonic signal of the group of ultrasonic signals, measure a time of flight from the corresponding ultrasonic emitter to the corresponding ultrasonic receiver;
- for each selected ultrasonic signal of the group of ultrasonic signals, calculate the sound speed value;
- compute the average sound speed which is an average of at least a part of the calculated sound speed values.

In addition, the control unit 10 is also configured to amplify the ultrasonic signals after they have been received by the ultrasonic receivers.

In addition, the control unit 10 is configured to calculate the thickness of the pipe 2 and the distance d, according to the dimensional measurement procedure 210.

The proposed apparatus 1 may be used to assess the homogenizing level of a given fluid product at the output 100b of a dispersion unit 100, as in figure 3. This assessment is a relative measurement, as it will be explained hereafter.

First of all, a given fluid product already homogenized, called here "reference fluid product", is characterized across a temperature range.

In particular, the sound speed at different temperatures is measured for the reference fluid product using the method 200 so as to obtain a curve of the sound speed as a function of the temperature.

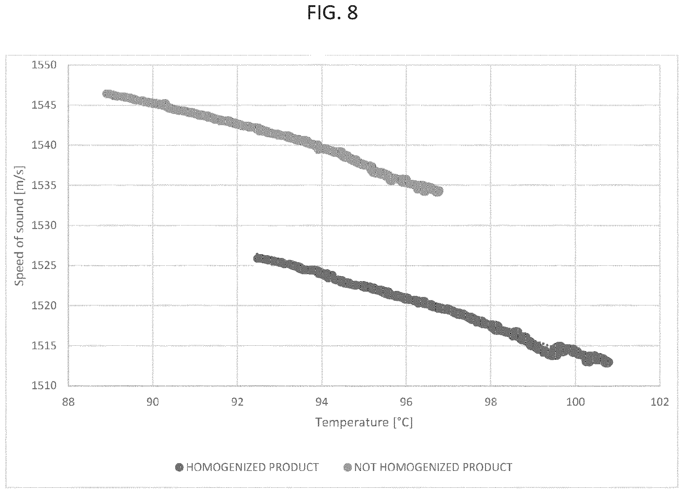

An example of this curve, also called "tendency curve", is illustrated in figure 8.

Once the tendency curve is obtained for the reference fluid product, the method 200 can be used to establish if a fluid product of the same type is actually properly homogenized.

In particular, the apparatus 1 is placed downstream the homogenizing apparatus 100. The sound speed of the fluid product exiting from the homogenizing apparatus 100 is measured in real-time using apparatus 1 and is compared to the tendency curve.

When the measured sound speed at the temperature of the measurement is outside a predefined compliance range of the sound speed retrieved from the tendency curve for said temperature, it means that the fluid product needs further homogenization.

An alarm signal may be produced by the apparatus 1 to notify nonconformity.

When the measured sound speed at the temperature of the measurement is within the predefined compliance range of the sound speed retrieved from the tendency curve for said temperature, it means that the fluid product has been properly homogenized.

With reference to figure 8, the blu curve is the tendency curve for a reference fluid product already homogenized, in particular according to a coffee cream recipe.

The orange curve is the plot of the sound speed at different temperatures for a fluid product (coffee cream), which is not homogenized yet.

From the comparison of the orange curve with the blue curve, it descends that the coffee cream still needs homogenization.

The relative measurement of the level of homogenization can be performed for different fluid products (formerly characterized) using the same apparatus 1, which enables a real-time monitoring on the homogenized fluid product exiting the homogenizing apparatus 100.

In another application, the apparatus 1 comprises a pipe 2 which is filled with a fluid product in static conditions, and the apparatus 1 is used for in batch measuring the sound speed of the fluid product.

The characteristics of the method and of the apparatus for measuring the sound speed in a fluid product contained in a pipe, according to the present invention emerge clearly from the above description, as do the advantages.

The presence of multiple emitting and receiving points for the ultrasonic signals allows to perform multiple measurements of the sound speed along the pipe. Multiple measurements are more reliable than using a single point of measure.

In addition, redundancy of ultrasonic transducers is advantageous in case of damage or malfunction of one or more of the transducers. As a matter of fact, failure of one transducer does not jeopardize the whole measurement, which is based indeed on an average of the sound speed values retrieved along the pipe.

In addition, arranging the ultrasonic transducers on the external surface of the inner tube avoids a direct contact with the fluid product which flows in the internal cavity. This results in a beneficial hygienic design of the pipe. In addition, the ultrasonic transducers are less likely to wear since they are not in contact with the fluid product.

The proposed method grants high accuracy in measuring the time of flight in all kinds of fluid product, despite their attenuating power on the ultrasonic signals and/or their opacity. A specific functionality is developed to increase the gain of the received signals, so that they can be detected.

It is not necessary to use different types of sensors depending on the specific fluid. The same set of ultrasonic transducers is used to obtain a fingerprint of any kind of fluid product.

It is indeed well-known that each fluid product has specific characteristics and different quality standards. The proposed solution allows to characterize any fluid products by sound speed using the same apparatus. Characterization is also the starting point for a real-time monitoring of the homogenization level.

In addition, the proposed invention allows to measure the distance between the emitter and the receiver/the reflecting surface with high accuracy thanks to an ultrasonic dimensional measurement run by the ultrasonic transducers installed in the pipe where the fluid is contained or flows.

This ultrasonic dimensional measurement is more accurate, quicker, and cheaper than mechanical or optical measurements.

In addition, no dedicated measurement equipment is required to perform a high precision measurement of the pipe dimensions.

## Claims

1. A method (200) for measuring the sound speed in a fluid product contained in a pipe (2), said method (200) comprising a main cycle which in turn comprises at least the following steps which are cyclically executed at least once:

   - emitting a plurality of ultrasonic signals (201) towards the fluid product in such a way that said ultrasonic signals pass through the fluid product, said ultrasonic signals being emitted by a plurality of emitting points (21) located along the pipe (2);
   - receiving the plurality of ultrasonic signals (202) after they have passed through the fluid product, said ultrasonic signals being received by a plurality of receiving points (22) located along the pipe (2), the number of receiving points (22) being the same as the number of emitting points (21);
   - selecting a group of ultrasonic signals (203) received at the receiving points (22);
   - for each selected ultrasonic signal of the group of ultrasonic signals, measuring a time of flight (207) from the corresponding emitting point (21) to the corresponding receiving point (22);
   - for each selected ultrasonic signal of the group of ultrasonic signals, calculating a sound speed value (208) as a ratio between a distance covered by the ultrasonic signal from the corresponding emitting point (21) to the corresponding receiving point (22) and the measured time of flight;

   at the end of the main cycle, said method (200) further comprising a step of computing an average sound speed (209) which is an average of at least a part of the sound speed values calculated in the main cycle.

2. The method (200) according to claim 1, wherein the average sound speed is an arithmetic mean of part or all the sound speed values calculated in the main cycle.

3. The method (200) according to claim 1 or 2, wherein the ultrasonic signals are simultaneously emitted by the plurality of emitting points (21).

4. The method (200) according to any one of the preceding claims, wherein the pipe (2) is arranged downstream a high-pressure homogenizer (100) in such a way that the method (200) is performed on the fluid product coming from said high-pressure homogenizer (100).

5. The method (200) according to any one of the preceding claims, wherein the main cycle further comprises a step of amplifying the ultrasonic signals (250) after they have been received at the receiving points (22).

6. The method (200) according to claim 5, wherein the step of amplifying the ultrasonic signals (250) comprises increasing the gain of the ultrasonic signals with time.

7. The method (200) according to claim 6, further comprising a step of measuring an amplitude of each ultrasonic signals after it is emitted by the corresponding emitting point (21) and, in response to the measured amplitude being below a minimum value, performing said step of amplifying (250).

8. The method (200) according to any one of the preceding claims, wherein the step of selecting the group of ultrasonic signals (203) comprises detecting any faults in the ultrasonic signals received at the receiving points (22) and, in response to no fault being detected, selecting the corresponding ultrasonic signal.

9. The method (200) according to any one of the preceding claims, wherein the step of selecting the group of ultrasonic signals (203) comprises:

   - measuring an amplitude (204) of each ultrasonic signal received at the corresponding receiving point (22);
   - in response to a measured amplitude within a predefined conformity range, selecting the corresponding ultrasonic signal (205);
   - in response to a measured amplitude outside said predefined conformity range, discarding the corresponding ultrasonic signal (206).

10. The method (200) according to any one of the preceding claims, wherein the emitting points (21) are distributed along one side of the pipe (2) and the receiving points (22) are distributed along an opposite side of the pipe (2) with respect to the fluid product, at each emitting point (21) being arranged an emitter which consists of an ultrasonic sensor (4) configured to emit ultrasonic signals, at each receiving point (22) being arranged a receiver which consists of an ultrasonic sensor (14) configured to receive ultrasonic signals.

11. The method (200) according to claim 10, wherein the distance covered by each ultrasonic signal from the corresponding emitting point (21) to the corresponding receiving point (22) is the distance between the emitter which has emitted said ultrasonic signal and the corresponding receiver which has received said ultrasonic signal.

12. The method (200) according to any of the claims 1 to 9, wherein each emitting point (21) coincides with one of the plurality of receiving points (22) so as to originate a transceiving point, the transceiving points being distributed along a same side of the pipe (2), at each transceiving point being arranged an ultrasonic transducer (4) configured to emit and receive ultrasonic signals, the ultrasonic signals emitted by said ultrasonic transducer (4) being reflected back by reflecting means (5a) arranged on an opposite side of the pipe (2) with respect to the fluid product.

13. The method (200) according to claim 12, wherein the distance covered by each ultrasonic signal from the corresponding emitting point (21) to the corresponding receiving point (22) is twice the distance between the ultrasonic transducer (4) and the reflecting means (5a).

14. The method (200) according to claim 12 or 13, further comprising a dimensional measurement procedure (210) which is performed before starting the main cycle of the method (200), said dimensional measurement procedure (210) comprising calculating a thickness of the pipe (2) and calculating the distance covered by the ultrasonic signal from the corresponding emitting point (21) to the corresponding receiving point (22).

15. The method (200) according to claim 14, wherein calculating the thickness of the pipe (2) comprises at least the following steps:

- measuring the sound speed at different temperatures in a predefined sample (211) made of the same material of the pipe (2);
- measuring the time of flight (212) in the pipe (2) in a condition of emptiness, which means no fluid is contained in the pipe (2);
- detecting the temperature (213) of the pipe (2);
- calculating the thickness (214) of the pipe (2) by multiplying the sound speed measured at the detected temperature and the time of flight measured in the pipe (2).

16. The method (200) according to claim 14 or 15, wherein calculating the distance covered by the ultrasonic signal from the corresponding emitting point (21) to the corresponding receiving point (22) comprises an initial cycle in turn comprising at least the following steps which are cyclically executed at least once:

- emitting a plurality of ultrasonic signals (216) towards a selected fluid product contained in the pipe (2) in such a way that said ultrasonic signals pass through the selected fluid product, said ultrasonic signals being emitted by the plurality of emitting points (21);
- receiving the plurality of ultrasonic signals (217) after they have passed through the selected fluid product, said ultrasonic signals being received by the plurality of receiving points (22);
- detecting (218) any faults in said ultrasonic signals received at the receiving points (22);
- for each ultrasonic signal of the plurality of ultrasonic signals, in response to no fault being detected, measuring a time of flight (219) from the corresponding emitting point (21) to the corresponding receiving point (22);
- for each ultrasonic signal of the plurality of ultrasonic signals, in response to no fault being detected, calculating a distance (220) covered by the ultrasonic signal from the corresponding emitting point (21) to the corresponding receiving point (22) as a sum of the thickness of the pipe (2) and an internal diameter of said pipe (2);

at the end of the initial cycle, said dimensional measurement procedure (210) further comprising a step of computing an average distance (221) which is an average of at least a part of the distances calculated in the initial cycle.

17. The method (200) according to any one of the claims 14 to 16, wherein calculating the distance covered by the ultrasonic signal from the corresponding emitting point (21) to the corresponding receiving point (22) further comprises a step of measuring the sound speed at different temperature in a selected fluid product (215), which is performed before the initial cycle.

18. The method (200) according to claim 16 or 17, wherein the average distance is an arithmetic mean of part or all the distances calculated in initial cycle.

19. An apparatus (1) for measuring the sound speed in a fluid product using to the method (200) according to any one the preceding claims, said apparatus (1) comprising:

- a pipe (2) having an internal cavity (3) for the passage of the fluid product, said internal cavity (3) having a variable diameter across the length the pipe (2);
- a plurality of ultrasonic emitters (14) installed on board of the pipe (2) and configured to emit ultrasonic signals;
- a plurality of ultrasonic receivers (4) installed on board of the pipe (2) and outside the internal cavity (3), said ultrasonic receivers (4) being distributed along the length of the pipe (2) and being configured to detect the ultrasonic signals, the number of ultrasonic receivers (4) being the same as the number of ultrasonic emitters (14);
- a control unit (10) configured to:

   • command the ultrasonic emitters (14) to emit a plurality of ultrasonic signals towards the fluid product in such a way that said ultrasonic signals pass through the fluid product;
   • command the ultrasonic receivers (4) to receive the plurality of ultrasonic signals emitted by the ultrasonic emitters (14) after they have passed through the fluid product,
   • select a group of ultrasonic signals received by the ultrasonic receivers (4);
   • for each selected ultrasonic signal of the group of ultrasonic signals, measure a time of flight from the corresponding ultrasonic emitter (14) to the corresponding ultrasonic receiver point (4);
   • for each selected ultrasonic signal of the group of ultrasonic signals, calculate a sound speed value as a ratio between a distance covered by the ultrasonic signal from the corresponding ultrasonic emitter (14) to the corresponding ultrasonic receiver (4) and the measured time of flight;
   • compute an average sound speed which is an average of at least a part of the calculated sound speed values.

20. The apparatus (1) according to claim 19, wherein said control unit (10) is also configured to amplify the ultrasonic signals after they have been received by the ultrasonic receivers (4).

21. The apparatus (1) according to claim 19 or 20, wherein the pipe (2) comprises:

   - an outer tube (6);
   - an inner tube (5) coaxially arranged inside the outer tube (6), said inner tube (5) having an internal surface (5a) which delimits the internal cavity (3);
   - a plurality of housings (7) located in an external surface (5b) of the inner tube (5), each of said ultrasonic receivers (4) being arranged in one of said housings (7).

FIG. 1

FIG. 2

FIG. 3

FIG. 4

FIG. 5a

200

**201** – EMITTING A PLURALITY OF ULTRASONIC SIGNALS TOWARDS THE FLUID PRODUCT BY A PLURALITY OF EMITTING POINTS

**202** – RECEIVING THE PLURALITY OF ULTRASONIC SIGNALS BY A PLURALITY OF RECEIVING POINTS AFTER THEY HAVE PASSED THROUGH THE FLUID PRODUCT

**250** – AMPLIFYING THE ULTRASONIC SIGNALS

**255** – CONDITIONING THE ULTRASONIC SIGNALS

**203** – SELECTING A GROUP OF ULTRASONIC SIGNALS RECEIVED AT THE RECEIVING POINTS

**204** – MEASURING AN AMPLITUDE OF EACH ULTRASONIC SIGNAL RECEIVED AT THE CORRESPONDING RECEIVING POINT

**205** – IN RESPONSE TO A MEASURED AMPLITUDE WITHIN A PREDEFINED CONFORMITY RANGE, SELECTING THE CORRESPONDING ULTRASONIC SIGNAL

**206** – IN RESPONSE TO A MEASURED AMPLITUDE OUTSIDE THE PREDEFINED CONFORMITY RANGE, DISCARDING THE CORRESPONDING ULTRASONIC SIGNAL

FIG. 5b

**207** – FOR EACH SELECTED ULTRASONIC SIGNAL OF THE GROUP OF ULTRASONIC SIGNALS, MEASURING A TIME OF FLIGHT FROM THE CORRESPONDING EMITTING POINT TO THE CORRESPONDING RECEIVING POINT

**208** – FOR EACH SELECTED ULTRASONIC SIGNAL OF THE GROUP OF ULTRASONIC SIGNALS, CALCULATING A SOUND SPEED VALUE AS A RATIO BETWEEN A DISTANCE COVERED BY THE ULTRASONIC SIGNAL FROM THE CORRESPONDING EMITTING POINT TO THE CORRESPONDING RECEIVING POINT AND THE MEASURED TIME OF FLIGHT

TO STEP 201 ◄ no — END OF THE CYCLE?

yes

**209** – COMPUTING AN AVERAGE SOUND SPEED USING AT LEAST A PART OF THE CALCULATED SOUND SPEED VALUES

FIG. 6a

210

**211** – MEASURING THE SOUND SPEED AT DIFFERENT TEMPERATURES IN A PREDEFINED SAMPLE MADE OF THE SAME MATERIAL OF THE PIPE

**212** – MEASURING THE TIME OF FLIGHT IN THE PIPE IN A CONDITION OF EMPTINESS

**213** – DETECTING THE TEMPERATURE OF THE PIPE

**214** – CALCULATING THE THICKNESS OF THE INNER TUBE BY MULTIPLYING THE SOUND SPEED MEASURED AT THE DETECTED TEMPERATURE AND THE TIME OF FLIGHT MEASURED IN THE PIPE

**215** – MEASURING THE SOUND SPEED AT DIFFERENT TEMPERATURES IN A SELECTED FLUID PRODUCT

FIG. 6b

**216** – EMITTING A PLURALITY OF ULTRASONIC SIGNALS TOWARDS A SELECTED FLUID PRODUCT CONTAINED IN THE PIPE BY THE PLURALITY OF EMITTING POINTS

**217** – RECEIVING THE PLURALITY OF ULTRASONIC SIGNALS BY THE PLURALITY OF RECEIVING POINTS AFTER THEY HAVE PASSED THROUGH THE SELECTED FLUID PRODUCT

**218** – DETECTING ANY FAULTS IN THE ULTRASONIC SIGNALS RECEIVED AT THE RECEIVING POINTS

**219** – FOR EACH ULTRASONIC SIGNAL OF THE PLURALITY OF ULTRASONIC SIGNALS, IN RESPONSE TO NO FAULT BEING DETECTED, MEASURING A TIME OF FLIGHT FROM THE CORRESPONDING EMITTING POINT TO THE CORRESPONDING RECEIVING POINT

**220** – FOR EACH ULTRASONIC SIGNAL OF THE PLURALITY OF ULTRASONIC SIGNALS, IN RESPONSE TO NO FAULT BEING DETECTED, CALCULATING A DISTANCE COVERED BY THE ULTRASONIC SIGNAL FROM THE CORRESPONDING EMITTING POINT TO THE CORRESPONDING RECEIVING POINT AS A SUM OF THE THICKNESS OF THE PIPE AND AN INTERNAL DIAMETER OF THE PIPE

TO STEP 216 ◄── no ── END OF THE CYCLE? ── yes ──► **221** – COMPUTING AN AVERAGE DISTANCE USING AT LEAST A PART OF THE CALCULATED DISTANCES

## FIG. 7a

## FIG. 7b

FIG. 8

| | Europäisches Patentamt European Patent Office Office européen des brevets | **EUROPEAN SEARCH REPORT** | **Application Number** EP 24 16 3898 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/055239 A1 (SINHA DIPEN N [US]) 8 March 2012 (2012-03-08) | 1-11, 14-20 | INV. G01N29/024 |
| Y | * Abstract, Desc. [0003], [0029], [0035]-[0040], [0044], [0052], Figs. 1A, 2, 8 * | 12,13,21 | |
| | ----- | | |
| X | US 2008/208483 A1 (LOOSE DOUGLAS H [US] ET AL) 28 August 2008 (2008-08-28) | 1,19 | |
| A | * Abstract, Desc. [0003], [0038]-[0041], Fig. 17 * | 2-18,20, 21 | |
| | ----- | | |
| Y | US 2004/031322 A1 (GREENWOOD MARGARET S [US]) 19 February 2004 (2004-02-19) | 12,13,21 | |
| A | * Abstract, Deswc. [0066]-[0068], Figs. 1-3 * | 1-11, 14-20 | |
| | ----- | | |
| A | US 5 473 934 A (COBB WESLEY [US]) 12 December 1995 (1995-12-12) * Desc. "Detailed description of the preferred ambodiments" 2nd paragraph * | 1-21 | |
| | ----- | | **TECHNICAL FIELDS SEARCHED (IPC)** G01N |

The present search report has been drawn up for all claims

| Place of search | Date of completion of the search | Examiner |
|---|---|---|
| Munich | 29 July 2024 | Reim, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 16 3898

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2024

| Patent document cited in search report | | Publication date | Patent family member(s) | | Publication date |
|---|---|---|---|---|---|
| US 2012055239 | A1 | 08-03-2012 | AU 2011295673 A1 | | 21-03-2013 |
| | | | BR 112013004982 A2 | | 31-05-2016 |
| | | | CN 103733061 A | | 16-04-2014 |
| | | | EP 2612139 A1 | | 10-07-2013 |
| | | | KR 20140009136 A | | 22-01-2014 |
| | | | US 2012055239 A1 | | 08-03-2012 |
| | | | WO 2012031302 A1 | | 08-03-2012 |
| US 2008208483 | A1 | 28-08-2008 | NONE | | |
| US 2004031322 | A1 | 19-02-2004 | NONE | | |
| US 5473934 | A | 12-12-1995 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1121973 A1

- US 5473934 A

**Non-patent literature cited in the description**

- **ALEXANDER L. BOWLER** ; **SERAFIM BAKALIS** ; **NICHOLAS J. WATSON**. Monitoring Mixing Processes Using Ultrasonic Sensors and Machine Learning. *Sensors*, 2020, vol. 20 (7), 1813, https://doi.ora/10.3390/s20071813

- **BERND HENNING** ; **JENS RAUTENBERG**. Process monitoring using ultrasonic sensor systems. *Ultrasonics*, 22 December 2006, vol. 44, e1395-e1399